# EUROPÄISCHE PATENTSCHRIFT

(11) **EP 1 674 685 B1**
(45) Veröffentlichungstag und Bekanntmachung des Hinweises auf die Patenterteilung: **10.10.2007**
(21) Anmeldenummer: 05026751.7
(22) Anmeldetag: 07.12.2005
(51) Int. Cl.: F01N 7/18, F16L 27/11

(54) **Verbindungselement zur nicht starren Verbindung der Endbereiche von zwei Rohrleitungen**
Connecting element for non-rigidly connecting the end portions of two pipes
Elément de raccordement pour raccorder des extrémités de deux tuyaux d'une façon non-rigide

(30) Priorität: 27.12.2004 DE 202004019988 U
(43) Veröffentlichungstag der Anmeldung: 28.06.2006
(73) Patentinhaber: Burgmann Industries GmbH & Co. KG, 82515 Wolfratshausen (DE)
(72) Erfinder: Spreidler, Dieter, Dr., 82515 Wolfratshausen (DE)
(74) Vertreter: Schmidt, Horst

(56) Entgegenhaltungen:
- EP-A- 0 511 000
- EP-A- 0 747 582
- EP-A- 1 045 118
- EP-B- 0 615 595
- WO-A-20/04059140
- DE-A1- 19 709 403
- US-A- 5 639 127

## Beschreibung

Die Erfindung betrifft ein Verbindungselement zur nicht starren Verbindung der Endbereiche von zwei Rohrleitungen, insbesondere bei einer Abgasrohrleitung von Brennkraftmaschinen, gemäss dem Oberbegriff des Anspruches 1.

Aus der EP 0 615 595 B ist ein Schwingungsentkopplungselement mit einem inneren Schutzrohr bekannt, das ein zwischen einem Paar Rohranschlussstücken vorgesehenes Balgelement inseitig gegen die Auswirkung von heissen hindurchströmenden Gasen abschirmen soll. Eine ähnliche Ausgestaltung ist der EP 0 747 582 B zu entnehmen. Beiden ist gemeinsam, dass das Schutzrohr eine starre Ausbildung hat und starr mit dem aufstromseitigen Rohranschlussstück des Schwingungsentkopplungselementes verbunden ist. Infolge davon verändert das Schutzrohr seine radiale Ausrichtung in Bezug auf das Balgelement bzw. abstromseitige Rohranschlussstück auch dann nicht, wenn diese bei Betrieb eine radiale Verlagerung aufgrund von Kräften erfahren, die von der betreffenden Rohrleitung auf das abstromseitige Rohranschlussstück ausgeübt werden. Um eine anschlagende Beziehung zwischen dem Schutzrohr und benachbarten Teilen des Schwingungsentkopplungselementes und damit starke Geräuschentwickelung zu verhindern, muss entweder die axiale Erstreckungslänge des Schutzrohres deutlich verkürzt werden, was nachteilige Auswirkungen auf die Hitzeschutzfunktion haben kann, oder es muss zwischen dem Schutzrohr und dem Balgelement bzw. Rohranschlussstück ein ausreichend grosser radialer Abstand vorgesehen werden. Im letzteren Fall hat dies eine deutliche Querschnittsverengung des Schutzrohres zur Folge und damit nicht nur eine erhöhte Strömungsgeschwindigkeit der Gase durch das Schutzrohr, sondern auch unerwünschte Querschnittsübergänge, an denen sich Wirbel bilden können, die eine u.U. erhebliche Geräuschentwicklung hervorrufen können. Wiederholte kräftige Kontaktnahmen zwischen Balgelement und Schutzrohr können Beschädigung am Balgelement bewirken. In Anbetracht dieser Umstände wurde schon vorgeschlagen (WO 2004/059140 A), ein Hitzeschutzelement in einen kurzen Montagerohrteil und einen damit über eine biegsame Balgverbindung verbundenen Schutzrohrteil zu unterteilen, der durch ein Kollisionsverhinderungselement an übermässigen radialen Ausschlägen gehindert ist.

Der Erfindung liegt die Aufgabe zugrunde, ein Verbindungselement der gattungsgemässen Art zu schaffen, das bei verringerter Geräuschentwicklung bei der Durchströmung von Gasen eine verbesserte Hitzeschutzfunktion ausüben kann.

Diese Aufgabe wird erfindungsgemäss durch die Merkmale des Anspruches 1 gelöst. Ein wesentliches Merkmal der Erfindung besteht darin, dass anders als bei herkömmlichen Anordnungen das Hitzeschutzelement keine durchgehende einseitig befestigte Ausgestaltung hat, sondern aus getrennten Teilen, nämlich einem Montagerohrteil und einem Schutzrohrteil besteht, wobei der Schutzrohrteil in radialer Richtung einwirkenden radialen Kräften nachgeben kann. Selbst wenn daher der Schutzrohrteil in seinen radialen Abmessungen so dimensioniert wird, dass er bis nahe an die Innenabmessungen des Balgelementes bzw. abstromseitigen Rohranschlussstückes reicht, haben radiale Verlagerungen des Balgelementes bzw. Rohranschlussstückes keine schädlichen Anschläge zur Folge, da der Schutzrohrteil die radialen Verlagerungen ohne Weiteres mitmachen kann. Die dadurch ermöglichte maximale Dimensionierung des Schutzrohrteiles und Montagerohrteiles schafft Strömungsverhältnisse im Hitzeschutzelement, die sich nur wenig von denjenigen in den übrigen Rohrleitungen unterscheiden brauchen. Beide Massnahmen haben eine wesentlich verringerte Geräuschentwicklung zur Folge. Gleichzeitig kann das Hitzeschutzelement wirksam das Balgelement über seine gesamte Länge gegenüber dem Einfluss der heissen Gase abschirmen und vor Beschädigungen durch Überhitzung schützen. Dabei sind diese Vorteile gegenüber bekannten Anordnung in fertigungstechnisch einfacher Weise realisierbar. Gemäss einer bevorzugten Weiterbildung der Erfindung kann die flexible Anbindung des Schutzrohrteiles am Montagerohrteil bzw. aufstromseitigen Rohranschlussstück ein schlauchförmiges Drahtgeflecht oder Drahtgewirk umfassen, das neben der biegsamen Anbindung eine geräuschdämpfende Funktion ausüben kann. Ferner kann wenigstens der Schutzrohrteil, vorzugsweise auch der Montagerohrteil, einen mehrschichtigen Laminataufbau haben, wobei eine wärmeisolierende Schicht vorgesehen ist, so dass der Durchgang von Wärme von der Innen- zur Aussenseite des Hitzeschutzelementes eingeschränkt wird und damit eine verbesserte Hitzeschutzfunktion vorliegt.

Die Erfindung wird nachfolgend anhand von Ausführungsformen und der Zeichnung näher erläutert. Es zeigen:
Fig. 1 in längsgeschnittener fragmentarischer Ansicht ein Verbindungselement mit einem Hitzeschutzelement gemäss einer Ausführungsform der Erfindung, und
Fig. 2 in längsgeschnittener Ansicht ein Verbindungselement gemäss Fig. 1, ausgestaltet als Schwingungsentkopplungselement.

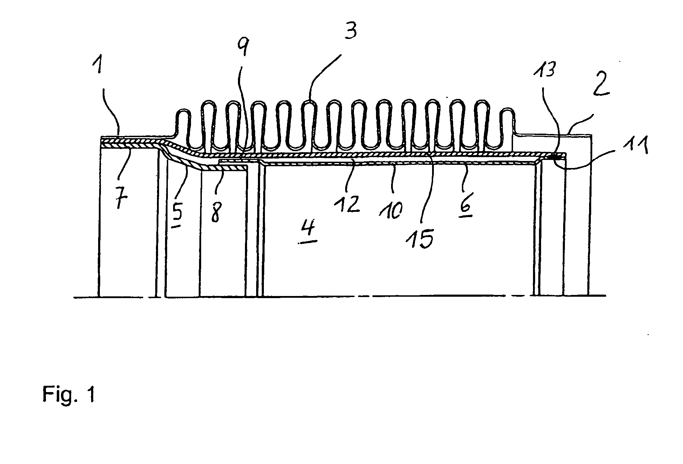

Eine Ausführungsform der Erfindung ist in Fig. 1 gezeigt. Mit dem Bezugszeichen 1 ist ein Rohranschlussstück an einem aufstromseitigen Ende und dem Bezugszeichen 2 ein Rohranschlussstück am abstromseitigen Ende des Verbindungselementes bezeichnet. Die Rohranschlussstücke 1, 2 stehen längs der Mittellängslinie des Verbindungselementes in einem geeigneten axialen Abstand voneinander und sind durch ein rohrförmiges Balgelement 3 miteinander verbunden. Das Balgelement 3 verleiht dem Verbindungselement aufgrund der gewellten Umfangswand eine axiale und radiale Nachgiebigkeit zum Ausgleich von axialen oder radialen gegenseitigen Versetzungen der Mittellängsachsen der Rohranschlussstücke 1, 2. Die Rohranschlussstücke 1, 2 können separate mit dem Balgelement 3 verbundene Rohrstutzen sein, die in geeigneter Weise mit dem benachbarten axialen Ende des Balgelementes verbunden, z.B. verschweisst, sind, oder es handelt sich um integrale endseitig des Balgelementes 3 ausgebildete rohrförmige Ansätze.

Ein das allgemeine Bezugszeichen 4 tragendes rohrförmiges Hitzeschutzelement ist vorgesehen, um das Balgelement 3 gegenüber einer Überhitzung infolge der durch das Verbindungselement hindurchströmenden heissen Gase, wie den Abgasen einer Brennkraftmaschine, zu schützen. Das Hitzeschutzelement 4 umfasst einen Montageteil 5 und einen Schutzrohrteil 6, die beide aus einem geeigneten hitzebeständigen Material, wie einem Stahlmaterial, gebildet sein können und eine im Wesentlichen steife Ausgestaltung haben.

Der Montagerohrteil 5 hat einen aufstromseitigen im Durchmesser erweiterten Endbereich 7 und verjüngt sich zu einem im Durchmesser etwas verringerten abstromseitigen Endbereich 8. Der aufstromseitige Endbereich 7 hat eine Abmessung, die an die des aufstromseitigen Rohranschlussstückes 1 angepasst ist, so dass beide angrenzend aneinander zu liegen kommen, wie dies in Fig. 1 gezeigt ist. Wie nachfolgend noch näher erläutert wird, ist der aufstromseitige Endbereich 7 des Montagerohrteiles 5 starr, d.h. unbeweglich mit dem Rohranschlussstück 1 verbunden, z.B. verschweisst.

Der Schutzrohrteil 6 hat einen im Durchmesser etwas erweiterten aufstromseitigen Endbereich 9, einen zentralen zylindrischen Bereich 10 und einen abstromseitigen im Durchmesser etwas erweiterten Endbereich 11. Der aufstromseitige Endbereich 9 ist so bemessen, dass er den abstromseitigen Endbereich 8 des Montagerohrteiles 5 um eine kurze Wegstrecke übergreifen kann, so dass er mit Lossitz auf den abstromseitigen Endbereich 8 anschlagbegenzt aufgeschoben werden kann. Zwischen den benachbarten Endbereichen 8, 9 des Montagerohrteiles 5 bzw. Schutzrohrteiles 6 besteht daher keine feste Verbindung, sondern eine solche, die eine strömungsgünstige Weiterleitung der Gase vom Montagerohrteil 5 in den Schutzrohrteil 6 gewährleistet.

Zur biegsamen Verbindung des Schutzrohrteiles 6 mit dem Montagerohrteil 5 bzw. dem aufstromseitigen Rohranschlussstück 1 ist ein Verknüpfungselement in Form eines schlauchförmigen biegsamen Drahtgeflechtes oder Drahtgewirkes 15 vorgesehen, welches den Schutzrohrteil 6 sowie Montagerohrteil 5 aussenumfänglich, vorzugsweise mit einem geringen radialen Abstand, wie bei 12 angedeutet ist, umgibt. Bei dem Drahtgeflecht 15 kann es sich um irgendeine geeignete Bauart handeln, z.B. eine solche, wie sie von der Firma Friederich Karg GmbH, Weiboldshauser Str. 1, 91792 Ellingen, unter der Handelsbezeichnung "MFK Standard SL" bezogen werden kann. Das Drahtgeflecht 15 ist mit seinem abstromseitigen Ende, wie bei 13 angedeutet ist, fest, z.B. durch Schweissen, mit dem abstromseitigen Endbereich 11 des Schutzrohrteiles 6 verbunden. Das aufstromseitige Ende des Drahtgflechtes 15 ist, vorzugsweise durch Schweissen, gleichzeitig mit dem aufstromseitigen Endbereich 7 des Montagerohres 5 und mit dem benachbarten Rohranschlussstück 1 fest verbunden.

Infolge der durch das Drahtgeflecht 15 geschaffenen biegsamen Verbindung des Schutzrohrteiles 6 mit dem Montagerohrteil 5 bzw. Rohranschlussstück 1 kann der Schutzrohrteil 6 den Verlagerungen elastisch nachgeben, die das Balgelement 3 bei Betrieb unter den unterschiedlichen, auf die Rohranschlussstücke 1, 2 ausgeübten radialen Kräfte erfährt. Anders als bei einem am Rohranschlussstück 1 befestigten herkömmlichen starren Hitzeschutzelement besteht daher nicht die Gefahr, dass das Hitzeschutzelement 4 nach der Erfindung bei Betrieb gegen benachbarte Bereiche des Balgelementes 3 oder abstromseitigen Rohranschlussstückes 2 blockierend anschlagen kann, was zu Beschädigungen und/oder erheblichen Geräuschentwicklungen führen kann. Das erfindungsgemässe Hitzeschutzelement 4 kann deshalb eine radiale Abmessung haben, die nur wenig geringer als die Innenabmessung des Balgelementes 3 zu sein braucht. Auch kann sich das Hitzeschutzelement 4, wenn erwünscht, über die gesamte axiale Länge des Balgelementes 3 und vorzugsweise bis ins Innere des vom abstromseitigen Rohranschlussstück 2 umgebenen Raumes erstrecken. Die aussenumfänglich des Hitzeschutzelementes 4 angeordneten Aufbauteile des Verbindungselementes können daher wirksam gegenüber Überhitzung geschützt werden.

Anstellen eines Verknüpfungselementes in Gestalt eines Drahtgeflechtes 15 könnten auch zwei oder mehrere umfänglich verteilt angeordnete Plattenfederelemente vorgesehen sein, die sich von der Befestigungsstelle 13 longitudinal längs des Schutzrohrteiles 6 und Montagerohrteiles 5 zur Befestigungsstelle am Rohranschlussstück 1 erstrecken können.

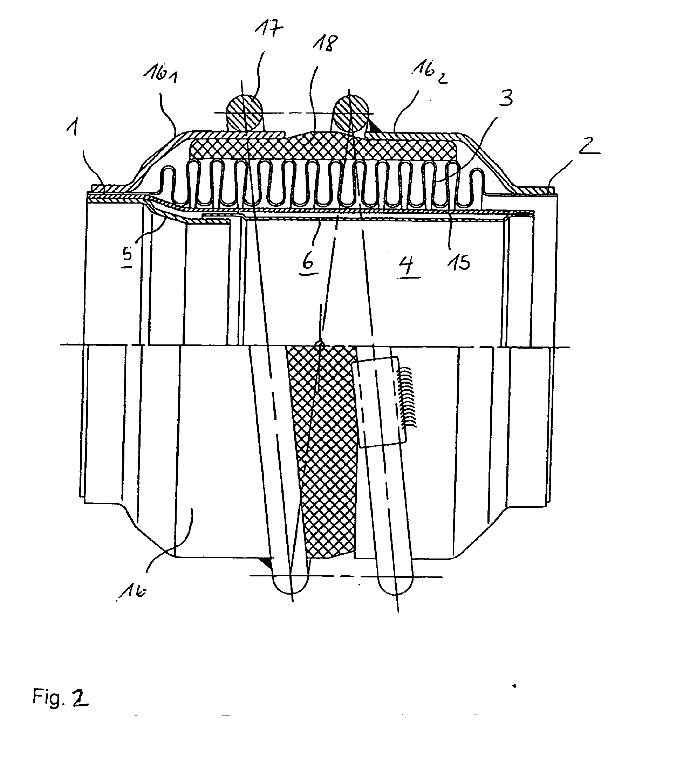

Das in Fig. 1 gezeigte Verbindungselement ist insbesondere zum Einsatz als Dehnungsausgleichelement geeignet, um unterschiedliche Ausdehnungen der mit dem Verbindungselement verbundenen Rohrleitungen auszugleichen. Das Verbindungselement kann jedoch auch mit weiteren Aufbauteilen zu einem Schwingungsentkopplungselement ausgebildet sein, wie dies in Fig. 2 gezeigt ist. Ausgehend von der Anordnung, wie sie in Fig. 1 gezeigt ist, ist aussenumfänglich des Balgelementes 3 ein steifes, an einer zwischenliegenden Stelle zwischen seinen aufund abstromseitigen Enden geteiltes Gehäuse 16 vorgesehen. Ein Gehäuseteil 16₁ ist mit dem aufstromseitigen Rohranschlussstück 1 und der andere Gehäuseteil 16₂ mit dem abstromseitigen Rohranschlussstück 2 in geeigneter Weise, z.B. durch Schweissen, fest verbunden. Untereinander sind die Gehäuseteile 16₁, 16₂ durch eine Wendelfeder 17 federnd verbunden, so dass die Gehäuseteile 16₁, 16₂ axiale und radiale Relativbewegungen zueinander vornehmen können. Eine Schwingungsdämpfungseinlage 18 aus einem Drahtgewirk kann zwischen den Gehäuseteilen 16₁ und 16₂ sowie dem Balgelement 3 vorgesehen werden, um in das Balgelement 3 induzierte Schwingungen zu dämpfen. Anstelle der in Fig. 2 gezeigten Ausgestaltung des Schwingungsentkopplungselementes könnte auch eine Anordnung vorgesehen werden, wie sie aus der EP 0 747 582 B bekannt ist. Bei dieser Anordnung ist das Gehäuse nicht geteilt, sondern endseitig über Gelenkfederanordnungen mit dem betreffenden Rohranschlussstück verbunden. Bezüglich weiterer Details dieser Anordnung kann auf die Druckschrift verwiesen werden.

Der Montagerohrteil und/oder Schutzrohrteil des erfindungsgemässen Hitzeschutzelementes können einen mehrschichtigen Laminataufbau haben, der eine wäreisolierende Schicht aus einem geeigneten, dem Fachmann grundsätzlich bekannten isolierenden Material umfassen kann, um eine weitere Hitzeabschirmung für die aussenumfänglich des Hitzeschutzelementes vorgesehenen Aufbauteile des Verbindungselementes zu schaffen.

## Patentansprüche

1. Verbindungselement zur nicht starren Verbindung der Endbereiche von zwei Rohrleitungen, insbesondere bei einer Abgasrohrleitung von Brennkraftmaschinen, mit einem Paar axial beabstandeter Rohranschlussstücke (1,2), einem zwischen den Rohranschtussstücken (1,2) angeordneten und endseitig mit diesen verbundenen rohrförmigen Balgelement (3), und einem im Inneren des Balgelementes (3) angeordneten rohrförmigen Hitzschutzelement (4) mit einem an einem seiner axialen Endbereiche (7) mit einem (1) der Rohranschlussstücke im Wesentlichen starr verbundenen Montagerohrteil (5) und einem gegenüber dem Montagerohrteil (5) beweglichen Schutzrohrteil (6), **dadurch gekennzeichnet, dass** der an oder nahe seinem dem Montagerohrteil (5) zugewandten axialen Endbereich (9), mit Lossitz gegenüber dem Montagerohrteil (5) angeordnete Schutzrohrteil (6) an oder nahe seinem anderen axialen Endbereich (11) mit dem einen Rohranschlussstück (1) oder dem Montagerohrteil (5) über ein flexibles Verknüpfungselement (15) verbunden ist.

2. Verbindungselement nach Anspruch 1, **dadurch gekennzeichnet, dass** das Verknüpfungselement ein schlauchförmiges Drahtgeflecht oder Drahtgewirk (15) umfasst.

3. Verbindungselement nach Anspruch 1, **dadurch gekennzeichnet, dass** das Verknüpfungselement zwei oder mehrere in einem Winkelabstand voneinander aussenumfänglich des Hitzeschutzelementes (4) vorgesehene Plattenfederelemente umfasst.

4. Verbindungselement nach einem der vorhergehenden Ansprüche, **dadurch gekennzeichnet, dass** wenigstens der Schutzrohrteil (6) mehrschichtig mit einer wärmeisolierenden Schicht ausgebildet ist.

5. Verbindungselement nach einem der vorhergehenden Ansprüche, **dadurch gekennzeichnet, dass** sich das Wärmeschutzelement (4) bis ins Innere des anderen Rohranschlussstückes (2) erstreckt.

6. Verbindungselement nach einem der vorhergehenden Ansprüche, **dadurch gekennzeichnet, dass** der Montagerohrteil (5) und Schutzrohrteil (6) jeweils als in sich steife Bauteile ausgebildet sind.

## Claims

1. A connecting element for non-rigidly connecting the end portions of two pipes, especially in an exhaust pipe for internal combustion engines, comprising a pair of axially spaced pipe-connecting pieces (1, 2), a tubular bellows element (3) arranged between the pipe-connecting pieces (1, 2) and connected thereto at ends thereof, and a tubular heat protecting element (4) arranged in the interior of the bellows element (3), said heat protecting element comprising a mounting pipe part (5) connected substantially rigidly at one of axial end portions (7) thereof to one (1) of the pipe-connecting pieces and a protective pipe part (6) moveable with respect to the mounting pipe part (5), **characterized in that** said protective pipe part (6) at or near the axial end portion (9) thereof facing the mounting pipe part (5) is arranged to be loosely seated with respect to the mounting pipe part (5) and at or near the other axial end portion (11) thereof is connected to either the pipe-connecting piece (1) or the mounting pipe part (5) by a flexible coupling element (15).

2. The connecting element according to claim 1, **characterized in that** the coupling element comprises a hose-like wire mesh or wire-knit (15).

3. The connecting element according to claim 1, **characterized in that** the coupling element comprises two or more angularly spaced plate spring elements disposed peripherally of the heat protecting element (4).

4. The connecting element according to any of the preceding claims, **characterized in that** at least the protective pipe part (6) is formed in multi-layer manner with a heat insulating layer.

5. The connecting element according to any of the preceding claims, **characterized in that** the heat protecting element (4) extends into the interior of the other pipe-connecting piece (2).

6. The connecting element according to any of the preceding claims, **characterized in that** each of the mounting pipe part (5) and the protective pipe part (6) are rigid components.

## Revendications

1. Élément de raccordement pour le raccordement non rigide des extrémités de deux conduites tubulaires, en particulier dans un tube d'échappement de gaz de moteurs à combustion interne, comportant une paire de raccords de tube (1, 2), écartés axialement, un soufflet (3) tubulaire, monté entre les raccords de tube (1, 2) et assemblé aux extrémités à ceux-ci, et un élément calorifuge ou de protection thermique (4) tubulaire, monté à l'intérieur du soufflet (3) et muni d'une partie tubulaire de montage (5), assemblée sensiblement de manière rigide au niveau de l'une de ses extrémités axiales (7) avec l'un des raccords de tube (1), et une partie tubulaire de protection (6) mobile par rapport à la partie tubulaire de montage (5), **caractérisé en ce que** la partie tubulaire de protection (6), agencée avec un ajustement libre par rapport à la partie tubulaire de montage (5), sur ou à proximité de l'extrémité axiale (9) orientée vers la partie tubulaire de montage (5), est assemblée sur ou à proximité de son autre extrémité axiale (11) à l'un des raccords de tube (1) ou à la partie tubulaire de montage (5) par l'intermédiaire d'un élément de liaison (15) flexible.

2. Élément de raccordement selon la revendication 1, **caractérisé en ce que** l'élément de liaison comprend un treillis de fils ou un tricotage de fils (15) tubulaires.

3. Élément de raccordement selon la revendication 1, **caractérisé en ce que** l'élément de liaison comporte deux ou plusieurs membranes ou diaphragmes ondulés, prévus à distance angulaire les unes des autres sur le pourtour extérieur de l'élément calorifuge ou de protection thermique (4).

4. Élément de raccordement selon l'une quelconque des revendications précédentes, **caractérisé en ce qu'**au moins la partie tubulaire de protection (6) est réalisée avec plusieurs couches dont une couche isolante thermique.

5. Élément de raccordement selon l'une quelconque des revendications précédentes, **caractérisé en ce que** l'élément calorifuge ou de protection thermique (4) s'étend jusqu'à l'intérieur de l'autre raccord de tube (2).

6. Élément de raccordement selon l'une quelconque des revendications précédentes, **caractérisé en ce que** la partie tubulaire de montage (5) et la partie tubulaire de protection (6) sont réalisées chacune sous forme d'une pièce rigide en soi.
